# EUROPEAN PATENT APPLICATION

(11) **EP 4 841 690 A1**
(43) Date of publication of application: **18.11.2026**
(21) Application number: 25191761.3
(22) Date of filing: 25.07.2025
(51) Int. Cl.: H01M 4/133, H01M 10/0525, H01M 4/36, H01M 4/02

(54) **METHOD FOR PREPARING NEGATIVE ELECTRODE MATERIAL**

(30) Priority: 15.05.2025 TW 114118244
(71) Applicant: CPC Corporation, Taiwan, Kaohsiung City 81126 (TW)
(72) Inventor: Chen, Yan-Shi, Taiwan (TW)
(74) Representative: Perani & Partners S.p.A.

(57) **Abstract**

The present invention provides a method for preparing a negative electrode material, which comprises: step (A), taking an artificial graphite, wherein the artificial graphite is prepared by a coking reaction of coke with a mesophase microdomain of 1-30 µm or 50-200 µm; step (B), taking a soft carbon, wherein the soft carbon is prepared by a carbonization reaction of coke with a mesophase microdomain of 1-30 µm or 50-200 µm; step (C), physically mixing the artificial graphite with the soft carbon to form the negative electrode material, wherein the particle size distribution D₁₀ of the negative electrode material is 1.87-3.84 µm, D₅₀ is 4.66-9.49 µm and D₉₀ is 8.74-21.10 µm. By using the method of the present invention, a negative electrode material can be obtained, and the negative electrode material can prolonging the battery cell cycle life, improve performances of high-speed charging and high-speed discharging of the battery cell.

## Description

### BACKGROUND OF THE INVENTION

### 1. Field of the Invention

The present disclosure relates to a method for preparing a negative electrode material, and in particular to a method for preparing a negative electrode material for a lithium battery.

### 2. Description of the Related Art

In recent years, due to high capacity and long service life, carbon materials such as soft carbon and artificial graphite have become prominent materials for batteries, especially negative electrode materials for lithium batteries.

A method for preparing soft carbon can refer to prior application of the applicant in Taiwan (Taiwan Patent TWI720805B, hereinafter referred to as Patent Document 1), the full text of which is incorporated into this description. In that application, specific manufacturing steps are carried out to manufacture a soft carbon that can improve battery performance.

In addition, a method for preparing artificial graphite can refer to prior application of the applicant in Taiwan (Taiwan Patent TWI756928B, hereinafter referred to as Patent Document 2), the full text of which is incorporated into this description. In that application, specific manufacturing steps are carried out to manufacture artificial graphite that can improve battery performance.

### BRIEF SUMMARY OF THE INVENTION

However, driven by the growing demand for products such as electric vehicles, the performance requirements for lithium batteries have become more stringent. Conventional lithium batteries prepared from negative electrode materials such as soft carbon and artificial graphite are gradually unable to meet user needs. The inventors found that mixing artificial graphite with soft carbon can decrease both the battery's internal resistance and the temperature rise during charging and discharging, thereby enhancing the safety of lithium battery during use. Furthermore, to prolong the cycle life, and improve the high-speed charging and high-speed discharging (for example, charging and discharging at 5C or more) of the lithium battery, the inventors further discovered that on the basis of a negative electrode material combination of soft carbon and artificial graphite with different particle sizes and crystalline states, and taking into account the differences in carbon microstructure and compatibility, the contact impedance R_{Li}⁺_{(Interface)} or the impedance R_{Li}⁺_{(S)} of lithium ion intercalating into/de-intercalating from the carbon microstructure can be reduced. This can also increase the conductivity of electrons and ions and reduce the internal resistance of a battery cell, thereby prolonging the battery cell cycle life, and improving performances of high-speed charging and high-speed discharging of the battery.

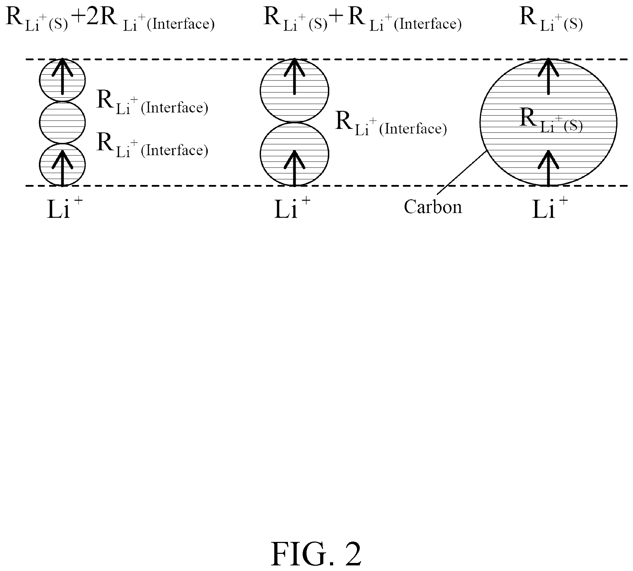

Specifically, the negative electrode material herein combines the artificial graphite having different particle sizes and crystalline states (e.g., polycrystalline state and few-crystalline state) with the soft carbon having different particle sizes and crystalline states. In addition, the combination of different particle sizes is considered because when the electrode plate thickness is the same and the lithium ions are intercalated into/de-intercalated from the same carbon microstructure (i.e., both the soft carbon and artificial graphite are of structure in polycrystalline state or few-crystalline state), the impedance R_{Li}⁺_{(S)} of the lithium ions intercalating into/deintercalating from carbon microstructure is the same. However, differences in particle sizes lead to different contact impedance R_{Li}⁺_{(Interface)}, which in turn affect the compatibility between the soft carbon and artificial graphite. For example, with reference to FIG. 2, FIG. 2 is a schematic diagram of impedance R_{Li}⁺_{(S)} and contact impedance R_{Li}⁺_{(Interface)} of intercalating into/de-intercalating from the carbon microstructure. As shown in FIG. 2, under the same electrode plate thickness (indicated by a space between two dashed lines in FIG. 2) and the same carbon microstructure (represented by circles in FIG. 2), although the impedance R_{Li}⁺_{(S)} of the lithium ions intercalating into/de-intercalating from the carbon microstructure is the same, due to the differences in particle size, Li⁺ ions during transmission (as indicated by the arrows in FIG. 2) may pass through different numbers of carbon microstructures (the left, middle, and right in FIG. 2 show Li⁺ ions passing through 3, 2, and 1 carbon microstructures, respectively). This results in different contact impedances R_{Li}⁺_{(Interface)}, that is, the fewer carbon microstructures passed, the smaller the contact impedance R_{Li}⁺_{(Interface)}. Moreover, the consideration of different crystalline states is due to that the carbon microstructures formed by different crystalline states will vary. Therefore, when the lithium ions are intercalated into/deintercalated from different carbon microstructures (namely, soft carbon and artificial graphite are different in crystalline state), the impedance R_{Li}⁺_{(S)} of the lithium ions intercalating into/de-intercalating from the carbon microstructures is different. However, under the condition that the particle sizes of soft carbon and artificial graphite are similar, the contact impedance R_{Li}⁺_{(Interface)} (compatibility) is the same.

Therefore, the inventors conducted an in-depth discussion on "how to take into account the differences in carbon microstructure and compatibility on the basis of the negative electrode material combination of the soft carbon/artificial graphite having different particle sizes and crystalline states, to reduce the contact impedance R_{Li}⁺_{(Interface)} or the impedance R_{Li}⁺_{(S)} of the lithium ions intercalating into/deintercalating from the carbon microstructure", thereby implementing the present disclosure.

Specifically, in order to solve above problems, in one aspect, the present disclosure provides a method for preparing a negative electrode material, which includes: step (A): taking an artificial graphite, where the artificial graphite is prepared by a coking reaction of coke with a mesophase microdomain of 1-30 µm or 50-200 µm; step (B): taking a soft carbon, where the soft carbon is prepared by a carbonization reaction of coke with a mesophase microdomain of 1-30 µm or 50-200 µm; and step (C): physically mixing the artificial graphite with the soft carbon to form the negative electrode material, where the particle size distribution D₁₀ of the negative electrode material is 1.87-3.84 µm, D₅₀ is 4.66-9.49 µm and D₉₀ is 8.74-21.10 µm.

In an embodiment, the tap density of the negative electrode material obtained in step (C) is 0.626-1.109 g/ml.

In an embodiment, in step (C), the artificial graphite and the soft carbon are physically mixed for 1 hour or more at a weight ratio of 1:1.

In an embodiment, under constant 0.2C charge current, the discharge capacity of the battery prepared from the negative electrode material obtained in step (C) at 5C discharge current is greater than 85% relative to that at 0.2C discharge current.

In an embodiment, under constant 0.2C discharge current, the charge capacity of the battery prepared from the negative electrode material obtained in step (C) at 5C charge current is greater than 75% relative to that at 0.2C charge current.

In an embodiment, under constant 0.2C charge current, the discharge capacity of the battery prepared from the negative electrode material obtained in step (C) at 8C discharge current is greater than 50% relative to that at 0.2C discharge current.

In an embodiment, under constant 0.2C discharge current, the charge capacity of the battery prepared from the negative electrode material obtained in step (C) at 8C charge current is greater than 50% relative to that at 0.2C charge current.

In an embodiment, in step (A), the particle size distribution D₅₀ of the artificial graphite is less than 3 µm or greater than 12 µm; in step (B), the particle size distribution D₅₀ of the soft carbon is 5-8 µm; and the tap density of the negative electrode material obtained in step (C) is 0.949-1.109 g/ml.

In an embodiment, the particle size distribution D₁₀ of the negative electrode material obtained in step (C) is 3.74-3.94 µm, D₅₀ is 9.39-9.59 µm and D₉₀ is 21.00-21.20 µm; and the cumulative proportion under particle sizes less than 2 µm is smaller than 1% by volume.

In an embodiment, in step (A), the artificial graphite is prepared from coke with the mesophase microdomain of 1-30 µm, and the particle size distribution D₁₀ of the negative electrode material obtained in step (C) is 1.87-2.23 µm, D₅₀ is 4.66-6.03 µm and D₉₀ is 9.02-12.60 µm. Furthermore, under the temperature of 45°C, the voltage of 4.3-2.4 V, the charge current of 2C, the discharge current of 3C, charging at mixed constant current/constant voltage (CC/CV) and discharging at a constant current (CC), the battery cell cycle life of the battery prepared from the negative electrode material obtained in step (C) is 400 cycles or more.

In an embodiment, in step (A), the artificial graphite is prepared from coke with the mesophase microdomain of 1-30 µm; in step (B), the soft carbon is prepared from coke with the mesophase microdomain of 1-30 µm, and the particle size distribution D₁₀ of the negative electrode material obtained in step (C) is 1.91-2.11 µm, D₅₀ is 4.93-5.13 µm and D₉₀ is 9.26-9.46 µm. Furthermore, under the temperature of 25°C, the voltage of 4.3-2.4 V, the charge current of 2C, the discharge current of 3C, charging at the mixed constant current/constant voltage (CC/CV) and discharging at the constant current (CC), the battery cell cycle life of the battery prepared from the negative electrode material obtained in step (C) is 2000 cycles or more.

In one aspect, the present disclosure is implemented in view of the aforementioned conventional problems, and aims to provide the method for preparing a negative electrode material, so as to obtain the negative electrode material that can prolong the battery cell cycle life, and improve performances of high-speed charging and high-speed discharging of the battery.

### BRIEF DESCRIPTION OF THE DRAWINGS

FIG. 1 is a flowchart of a method for preparing a negative electrode material according to the present disclosure.
FIG. 2 is a schematic diagram of impedance R_{Li}⁺_{(S)} and contact impedance R_{Li}⁺_{(Interface)} of intercalating into/de-intercalating from a carbon microstructure.

### DETAILED DESCRIPTION OF THE INVENTION

The following describes the implementation of the present disclosure with specific embodiments. Those skilled in the art can understand other advantages and effects of the present disclosure from the content disclosed in the description. The present disclosure can also be implemented or applied through various other specific embodiments, and the details in the description can be modified and changed in various ways based on different perspectives and applications, without departing from the spirit of the present disclosure.

Unless otherwise stated herein, the term "A-B" used in the description and the attached application patent scope refers to "A or more and B or less". For example, the term "10-40 wt%" refers to "10 wt% or more and 40 wt% or less".

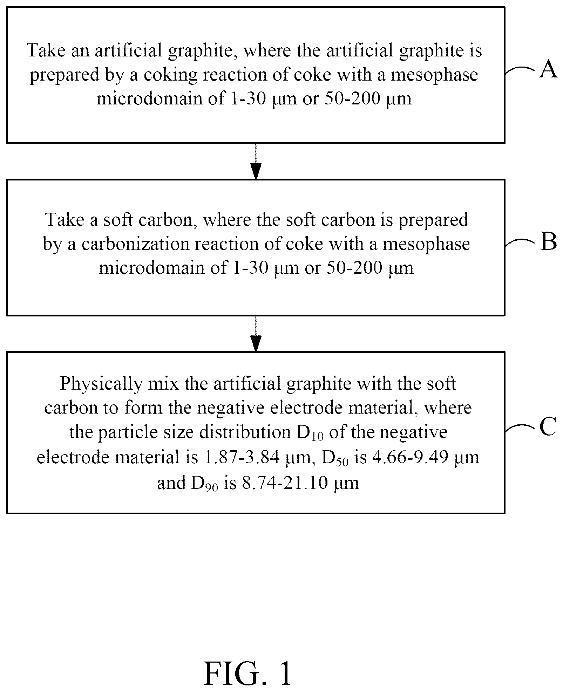

First, with reference to FIG. 1, FIG. 1 is a flowchart of a method for preparing a negative electrode material according to the present disclosure. As shown in FIG. 1, the method for preparing a negative electrode material according to the present disclosure includes: step (A)-step (C). The following will provide a detailed description of each step.

### [Step (A)]

Step (A) includes: taking artificial graphite, where the artificial graphite is prepared by a coking reaction of coke with a mesophase microdomain of 1-30 µm or 50-200 µm. A method for preparing an artificial graphite can refer to the patent document 2 (Taiwan Patent TWI756928B), and specifically, includes: (A1): taking heavy oil, and carrying out continuous coking reaction to form coke from the heavy oil, where the coke has a plurality of mesophase microdomains, and the size of the mesophase microdomains is 1-30 µm or 50-200 µm; and (A2): taking the coke obtained in step (A1), and sequentially carrying out processes of pre-sintering carbonization treatment, grinding classification, high-temperature carbonization treatment and graphitization treatment to form artificial graphite in a polycrystalline state or artificial graphite in a few-crystalline state from the coke. If the size of the mesophase microdomains of the coke is 1-30 µm, the artificial graphite in the polycrystalline state can be formed; and if the size of the mesophase microdomains of the coke is 50-200 µm, the artificial graphite in the few-crystalline state can be formed.

### [Step (B)]

Step (B) includes: taking a soft carbon, where the soft carbon is prepared by a coking reaction of coke with a mesophase microdomain of 1-30 µm or 50-200 µm. A method for preparing a soft carbon can refer to the patent document 1 (Taiwan Patent TWI720805B), and specifically, includes: (B1): taking heavy oil, and carrying out continuous coking reaction to form coke from the heavy oil, where the coke has a plurality of mesophase microdomains, and the size of the mesophase microdomains is 1-30 µm or 50-200 µm; and (B2): taking the coke obtained in step (B1), and carrying a treatment process to carbonize the coke so as to obtain the soft carbon, where the treatment process includes: carrying out pre-sintering carbonization treatment on the coke, and carrying out high-temperature carbonization treatment or modification carbonization treatment after the pre-sintering carbonization treatment. If the size of the mesophase microdomains of the coke is 1-30 µm, the soft carbon in the polycrystalline state can be formed; and if the size of the mesophase microdomains of the coke is 50-200 µm, the soft carbon in the few-crystalline state can be formed.

### [Step (C)]

Step (C) includes: physically mixing the artificial graphite obtained in step (A) with the soft carbon obtained in step (B) to form the negative electrode material, where the particle size distribution D₁₀ of the negative electrode material is 1.87-3.84 µm, D₅₀ is 4.66-9.49 µm and D₉₀ is 8.74-21.10 µm. In a preferred embodiment, step (C) is carried out by physically and uniformly mixing the artificial graphite with the soft carbon at a weight ratio of 1:1 by a mixer utilizing mechanical force and/or gravity for 1 hour or more, for example, 3 hour.

In addition, the particle size distribution of the negative electrode material can be measured by a known method, for example, a particle size analyzer can be used. Furthermore, in an embodiment, the tap density of the negative electrode material obtained in step (C) is 0.626-1.109 g/ml, and the tap density can also be measured by the known method, for example, a powder tap density analyzer can be used. In this way, the particle size distribution and the tap density of the negative electrode material are within the above range, and therefore, the negative electrode material with high battery performance can be obtained.

### [Examples]

The present disclosure will be specifically described with each example below, but not limited thereto.

### <Preparation of artificial graphite>

Based on step (A), artificial graphite GA to artificial graphite GD in Preparation Examples 1-4 were obtained. In the Preparation Example 1, the coke with the mesophase microdomain of 1-30 µm was used, and then the artificial graphite GA in a polycrystalline state was obtained; and in the Preparation Examples 2-4, the coke with the mesophase microdomain of 50 to 200 µm was used, and then the artificial graphite GB to artificial graphite GD in a few-crystalline state were obtained. The particle size distribution of the artificial graphite GA to the artificial graphite GD is shown in Table 1 below. In addition, the particle size distribution of the commercially available artificial graphite (purchased from China Steel Chemical Corporation, product name MG11A) is also shown in Table 1.

**[Table 1]**

| Sample | Crystalline state | Particle size (µm) | | |
|---|---|---|---|---|
| | | D₁₀ | D₅₀ | D₉₀ |
| Preparation Example 1 Artificial graphite GA | Polycrystalline state | 1.89 | 4.79 | 9.53 |
| Preparation Example 2 Artificial graphite GB | few-crystalline state | 2.22 | 4.87 | 8.74 |
| Preparation Example 3 Artificial graphite GC | few-crystalline state | 1.42 | 2.95 | 4.96 |
| Preparation Example 4 Artificial graphite GD | few-crystalline state | 4.99 | 12.80 | 26.90 |
| Commercially available artificial graphite MG11A | Unable to confirm | 2.89 | 9.21 | 14.60 |

### <Preparation of soft carbon>

Based on step (B), soft carbon SA to soft carbon SC in Preparation Examples 5-7 were obtained. In the Preparation example 7, the coke with the mesophase microdomain of 1-30 µm was used, and then the soft carbon SC in a polycrystalline state was obtained; and in the Preparation Examples 5-6, the coke with the mesophase microdomain of 50-200 µm was used, and then the soft carbon SA to soft carbon SB in a few-crystalline state were obtained. The particle size distribution of the soft carbon SA to the soft carbon SC is shown in Table 2 below. In addition, the particle size distribution of CPC soft carbon (purchased from CPC Corporation, Taiwan, product name PPSC) is also shown in the Table 2.

**[Table 2]**

| Sample | Crystalline state | Particle size (µm) | | |
|---|---|---|---|---|
| | | D₁₀ | D₅₀ | D₉₀ |
| Preparation Example 5 Soft carbon SA | few-crystalline state | 3.33 | 7.99 | 15.40 |
| Preparation Example 6 Soft carbon SB | few-crystalline state | 1.85 | 4.52 | 8.77 |
| Preparation Example 7 Soft carbon SC | Polycrystalline state | 2.13 | 5.09 | 9.15 |
| CPC soft carbon PPSC | few-crystalline state | 4.62 | 10.20 | 18.10 |

### <Example 1>

Artificial graphite GA and soft carbon SA were physically mixed for 1 hour at a weight ratio of 1:1 to obtain a negative electrode material 1; and the particle size distribution and the tap density of the negative electrode material 1 are shown in Table 3 below.

### <Examples 2-13>

On the basis of a combination formula of the artificial graphite and the soft carbon shown in Table 3, the artificial graphite and the soft carbon were physically mixed for 1 hour at a weight ratio of 1:1 so as to obtain negative electrode materials 2-13 in Examples 2-13; and the particle size distribution and the tap density of the negative electrode materials 2-13 are show in Table 3 below. The Example 13 was treated as a control group.

**[Table 3]**

| No. | Combination formula | Tap density (g/ml) | Particle size (µm) | | |
|---|---|---|---|---|---|
| | | | D₁₀ | D₅₀ | D₉₀ |
| Example 1 | Graphite GA + Soft carbon SA | 0.664 | 2.23 | 6.03 | 12.60 |
| Example 2 | Graphite GA + Soft carbon SB | 0.665 | 1.87 | 4.66 | 9.02 |
| Example 3 | Graphite GA + Soft carbon SC | 0.666 | 2.01 | 5.03 | 9.36 |
| Example 4 | Graphite GB + Soft carbon SA | 0.644 | 2.51 | 5.80 | 11.60 |
| Example 5 | Graphite GB + Soft carbon SB | 0.626 | 2.05 | 4.74 | 8.76 |
| Example 6 | Graphite GB + Soft carbon SC | 0.665 | 2.23 | 5.02 | 8.74 |
| Example 7 | Graphite GC + Soft carbon SA | 0.949 | 2.63 | 6.41 | 12.60 |
| Example 8 | Graphite GC + Soft carbon SB | 0.917 | 2.06 | 5.07 | 9.52 |
| Example 9 | Graphite GC + Soft carbon SC | 0.949 | 2.26 | 5.38 | 9.52 |
| Example 10 | Graphite GD + Soft carbon SA | 1.109 | 3.84 | 9.49 | 21.10 |
| Example 11 | Graphite GD + Soft carbon SB | 1.052 | 2.24 | 6.48 | 19.20 |
| Example 12 | Graphite GD + Soft carbon SC | 1.109 | 2.79 | 6.97 | 19.20 |
| Example 13 (Control Group) | Commercially available graphite + CPC soft carbon MG11A+PPSC | 0.989 | 4.27 | 9.79 | 16.60 |

As shown in Table 3, compared with adding the artificial graphite GA or artificial graphite GB having medium particle size (D₅₀ was about 5 µm), adding the artificial graphite GC having small particle size (D₅₀<3 µm) or artificial graphite GD having large particle size (D₅₀> 12 µm) to the soft carbon SA and soft carbon SC having medium particle size (D₅₀ is 5-8 µm) can improve the tap density of the negative electrode material to be 0.94 g/ml or above on the basis of the particle size difference between the artificial graphite and the soft carbon, which is conducive to filling a battery with more negative electrode materials, thereby increasing the volume specific capacity of the battery.

### [Test Examples 1-13]

First, negative electrode materials 1-13 were used for preparing conductive films 1-13 of a negative electrode of a small soft-pack full battery, respectively. Specifically, 93.5 wt% of the negative electrode materials 1-13, 4.5 wt% of a binder (PVDF) and 2 wt% of conductive carbon black were used for preparing the conductive films 1-13 of a negative electrode, respectively. Then, the conductive films 1-13 of the negative electrode with the thickness of 100-110 µm were formed on a copper foil so as to form negative electrodes 1-13.

Secondly, a positive electrode of the small soft-pack full battery was prepared. The positive electrode included an aluminum foil as a conductive carrier, and a conductive film formed on the surface of the aluminum foil. The conductive film of the positive electrode included 92.5 wt% of lithium nickel cobalt manganese oxide (LNMC, capacity ≧ 150mAh/g), 2.5 wt% of the binder (PVDF), and 5 wt% of a conductivity additive (conductive carbon black, purchased from Timcal, named Super P).

Thirdly, the negative electrodes 1-13, the positive electrode, an electrolyte solution and a separator (brand: Celgard, material: PP, thickness: 20 µm) were assembled into the small soft-pack full battery (length x width x height was 4 cm x 2 cm x 0.2 cm, and the battery cell capacity was 0.15-0.2 Ah) in the Test Examples 1-13 by artificial lamination. The electrolyte solution included 99 wt% of 1M LiPF₆ solution and 1 wt% of vinylene carbonate. The LiPF₆ solution included LiPF₆, EC, EMC and diethyl carbonate (referred to as DEC), and the volume ratio of EC to EMC to DEC was 1:1:1.

Fourthly, the charge capacity and discharge capacity of the small soft-pack full battery in the Test Examples 1-13 were tested by a charging-discharging machine (manufacturer: Maccor, model: Series 4000). As for the charge capacity test, under a voltage range of 4.3-2.4 V and constant 0.2C discharge current (discharging at 0.2C referred to that discharging could be completed after 5 hour), the charge capacity at 5C or 8C charge current (charging at 5C or 8C referred to that charging could be completed after 1/5 hour or 1/8 hour) was tested relative to 0.2C charge current (charging at 0.2C referred to that charging could be completed after 5 hour); and the test result is shown in Table 4. Moreover, as for the discharge capacity test, under a voltage range of 4.3-2.4 V and constant 0.2C charge current, the discharge capacity at 5C or 8C discharge current was tested relative to 0.2C discharge current; and the test result is shown in Table 4.

**[Table 4]**

| | Charge at 5C/0.2C (%) | Charge at 8C/0.2C (%) | Discharge at 5C/0.2C (%) | Discharge at 8C/0.2C (%) |
|---|---|---|---|---|
| Test Example 1 | 85.69 | 68.75 | 93.29 | 73.59 |
| Test Example 2 | 81.60 | 69.02 | 87.40 | 58.96 |
| Test Example 3 | 80.98 | 63.53 | 90.06 | 71.08 |
| Test Example 4 | 80.94 | 62.59 | 91.50 | 63.32 |
| Test Example 5 | 82.49 | 67.23 | 90.88 | 59.20 |
| Test Example 6 | 79.71 | 62.35 | 87.11 | 54.75 |
| Test Example 7 | 84.36 | 70.00 | 88.18 | 63.84 |
| Test Example 8 | 80.77 | 65.18 | 87.51 | 60.58 |
| Test Example 9 | 81.00 | 57.49 | 88.69 | 64.84 |
| Test Example 10 | 80.60 | 67.69 | 90.84 | 69.70 |
| Test Example 11 | 78.47 | 61.48 | 89.87 | 69.82 |
| Test Example 12 | 75.33 | 52.06 | 89.27 | 71.70 |
| Test Example 13 | 64.25 | 42.19 | 80.30 | 46.65 |

First, as shown in Table 4, in the Test Example 13, at the constant 0.2C discharge current and 5C charge current, the charge capacity at 5C charge current is 64.25% relative to that at 0.2C charge current, that is, when 100% of rated capacity can be achieved at 0.2C charge current, the charge capacity can reach 64.25% while charging at 5C large current. Relatively, in the Test Examples 1-12, the charge capacity under the same condition is greater than 75%, and in the Test Examples 1-5 and the Test Examples 7-10, the charge capacity can reach 80% or above, which shows an effect of good large-current charge capability (namely, high-speed charging).

Secondly, as shown in Table 4, in the Test Example 13, under constant 0.2C discharge current and 8C charge current, the charge capacity at 8C charge current is 42.19% relative to that at 0.2C charge current. Relatively, in the Test Examples 1-12, the charge capacity under the same condition is greater than 50%, and in the Test Examples 1-8 and the Test Examples 10-11, the charge capacity can reach 60% or above, which shows an effect of good large-current charge capability.

Thirdly, as shown in Table 4, in the Test Example 13, under constant 0.2C charge current and 5C discharge current, the discharge capacity at 5C discharge current is 80.30% relative to that at 0.2C discharge current. Relatively, in the Test Examples 1-12, the discharge capacity under the same condition is greater than 85%, and in the Test Example 1, the Test Examples 3-5 and the Test Example 10, the discharge capacity can reach 90% or above, which shows an effect of good large-current discharge capability (namely, high-speed discharging).

Fourthly, as shown in Table 4, in the Test Example 13, under constant 0.2C charge current and 8C discharge current, the discharge capacity at 8C discharge current is 46.65% relative to that at 0.2C discharge current. Relatively, in the Test Examples 1-12, the discharge capacity under the same condition is greater than 50%, and in the Test Example 1, the Test Examples 3-4 and the Test Examples 7-12, the discharge capacity can reach 60% or above, which shows an effect of good large-current discharge capability. Particularly, in the Test Examples 7-12, the tap density is high, so the discharge capacity at 8C discharge current relative to 0.2C discharge current is generally superior to that in the Test Examples 1-6.

Then, the inventors also measured the average temperature rise (referred to as temperature rise amount) during the charging at 5C and 8C, and the results are shown in Table 5 below.

**[Table 5]**

| | Charge at 5C/0.2C (%) | Average temperature rise in charging at 5C | Charge at 8C/0.2C (%) | Average temperature rise in charging at 8C |
|---|---|---|---|---|
| Test Example 1 | 85.69 | 3.30 | 93.29 | 6.5 |
| Test Example 2 | 81.60 | 3.15 | 87.40 | 5.3 |
| Test Example 3 | 80.98 | 2.95 | 90.06 | 5.2 |
| Test Example 4 | 80.94 | 2.60 | 91.50 | 6.9 |
| Test Example 5 | 82.49 | 2.30 | 90.88 | 5.8 |
| Test Example 6 | 79.71 | 2.55 | 87.11 | 5.0 |
| Test Example 7 | 84.36 | 2.40 | 88.18 | 6.2 |
| Test Example 8 | 80.77 | 2.85 | 87.51 | 6.0 |
| Test Example 9 | 81.00 | 2.35 | 88.69 | 4.6 |
| Test Example 10 | 80.60 | 2.20 | 90.84 | 5.2 |
| Test Example 11 | 78.47 | 2.45 | 89.87 | 4.6 |
| Test Example 12 | 75.33 | 2.30 | 89.27 | 4.2 |
| Test Example 13 | 64.25 | 3.10 | 80.30 | 5.5 |

First, as shown in Table 5, in the Test Example 13, the average temperature rise in charging at 5C is 3.1°C. Relatively, in the Test Examples 3-12, the average temperature rise under the same condition is less than 3.0°C, and in the Test Examples 5, 10 and 12, it is even lower than 2.3°C, which shows an effect of reducing the temperature rise. In this way, the particle size of artificial graphite/soft carbon is similar (Test Example 5) or the particle size of the artificial graphite is slightly larger than that of the soft carbon (Test Examples 10 and 12), and therefore, the effect of reducing the temperature rise isbetter.

Secondly, as shown in Table 5, in the Test Example 13, the average temperature rise in charging at 8C is 5.5°C. Relatively, in the Test Examples 2-3, the Test Example 6, and the Test Examples 9-12, the average temperature rise under the same condition is lower than 5.5°C, and in the Test Examples 9, 11 and 12, it is even lower than 5.0°C, which shows the effect of reducing the temperature rise.

Thirdly, the battery cell cycle life of the small soft-pack full battery in the Test Examples 1-13 was tested at normal temperature. Specifically, under the temperature of 25°C, voltage of 4.3-2.4 V, charge current of 2C, discharge current of 3C, charging at mixed constant current/constant voltage (CC/CV) and discharging at the constant current (CC), the battery cell cycle life of the small soft-pack full battery in the Test Examples 1-13 was tested, the number of cycles when the capacity retention was less than 80% was taken as the result of the battery cell cycle life, as shown in Table 6 below.

Additionally, the battery cell cycle life of the small soft-pack full battery in the Test Examples 1-13 was tested at high temperature. Specifically, under the temperature of 45°C, voltage of 4.3-2.4 V, charge current of 2C, discharge current of 3C, charging at mixed constant current/constant voltage (CC/CV) and discharging at the constant current (CC), the battery cell cycle life of the small soft-pack full battery in the Test Examples 1-13 was tested, the number of cycles when the capacity retention was less than 80% was taken as the result of the battery cell cycle life, as shown in Table 6 below.

**[Table 6]**

| | Battery cell cycle life at 25°C (cycles) | Battery cell cycle life at 45°C (cycles) |
|---|---|---|
| Test Example 1 | 1000 | 600 |
| Test Example 2 | 1000 | 600 |
| Test Example 3 | 2000 | 900 |
| Test Example 4 | 1000 | 800 |
| Test Example 5 | 1000 | 400 |
| Test Example 6 | 1000 | 400 |
| Test Example 7 | 600 | 400 |
| Test Example 8 | 600 | 400 |
| Test Example 9 | 500 | 400 |
| Test Example 10 | 500 | 400 |
| Test Example 11 | 500 | 300 |
| Test Example 12 | 400 | 200 |
| Test Example 13 | 200 | 100 |

First, according to the result shown in Table 6, in the Test Example 13, the battery cell cycle life at normal temperature is about 200 circles. Relatively, in the Test Examples 1-12, the battery cell cycle life at normal temperature is greater than 200 circles, and in the Test Example 3, the cycle life is up to 2000 circles, which indicates that the cycle life is greatly prolonged, and the effect of prolonging the battery cell cycle life is shown. Particularly, in the Test Example 3, the artificial graphite in the polycrystalline state (namely, in step (A), the artificial graphite was prepared from coke with the mesophase microdomain of 1-30 µm) and the soft carbon in the polycrystalline state (namely, in step (B), the soft carbon was prepared from coke with the mesophase microdomain of 1-30 µm) were matched and combined, so that the impedance of the lithium ions intercalating into/de-intercalating from the carbon microstructure was the same, and the impedance R_{Li}⁺_{(S)} was reduced; and moreover, the particle size distribution of the artificial graphite and the soft carbon (the particle size distribution D₁₀ of the artificial graphite GA was 1.89 µm, D₅₀ was 4.79 µm and D₉₀ was 9.53 µm, the particle size distribution D₁₀ of the soft carbon SC was 2.13 µm, D₅₀ was 5.09 µm and D₉₀ was 9.15 µm) was similar, so that the contact impedance R_{Li}⁺_{(Interface)} was reduced, and accordingly the compatibility was increased; and therefore, in the Test Example 3, the optimal battery cell cycle life was shown.

Secondly, according to the result shown in Table 6, in the Test Example 13, the battery cell cycle life of at high temperature (45°C) is about 100 circles. Relatively, in the Test Examples 1-12, the battery cell cycle life at normal temperature is greater than 100 circles, and in the Test Examples 1-3, the battery cell cycle life reaches 600 circles or more (in the Test Example 3, the artificial graphite in the polycrystalline state was matched with the soft carbon in the polycrystalline state, and in the Test Examples 1-2, the artificial graphite in the polycrystalline state was matched with the soft carbon in the few-crystalline state), which indicates that due to the use of the artificial graphite in the polycrystalline state (namely, in step (A), the artificial graphite was prepared by a coking reaction of coke with a mesophase microdomain of 1-30 µm), the battery cell cycle life is preferably prolonged.

Finally, in the Test Examples 10-12, the influence of the cumulative proportion of the negative electrode materials 10-12 (namely, the particle size distribution D₁₀ is 3.74-3.94 µm, D₅₀ is 9.39-9.59 µm and D₉₀ is 21.00-21.20 µm) having the particle size less than 2 µm on the battery cell cycle life at high temperature was discussed. In the negative electrode material 10, the cumulative proportion of the negative electrode material having the particle size less than 2 µm was about 0.6% by volume; in the negative electrode material 11, the cumulative proportion of the negative electrode material having the particle size less than 2 µm was about 2.0% by volume; and in the negative electrode material 12, the cumulative proportion of the negative electrode material having the particle size less than 2 µm was about 1.3% by volume.

Then, the inventors found that if the proportion of fine powder (particle size less than 2 µm) was high, the thickness of a solid electrolyte interphase (SEI) film generated at high temperature was greater, leading to an increase in contact impedance R_{Li}⁺_{(Interface)} and a decrease in cycle life. Therefore, since the cumulative proportion of the negative electrode material 10 having the particle size less than 2 µm in the Test Example 10 was less than 1% by volume, the fine powder proportion was lower than that of the negative electrode materials 11 and 12, so that in the Test Example 10, the cycle life was superior to that in the Test Examples 11-12.

Based on above, by the method according to the present disclosure, the negative electrode material can be obtained, which can prolong the battery cell cycle life, and improve performances of high-speed charging and high-speed discharging of the battery.

The present disclosure is not limited to the above-mentioned embodiments and various changes can be made within the scope indicated by the claims. Furthermore, embodiments formed by appropriately combining the technical means disclosed in different embodiments are also included within the technical scope of the present disclosure.

## Claims

1. A method for preparing a negative electrode material, comprising:
step (A): taking an artificial graphite, wherein the artificial graphite is prepared by a coking reaction of coke with a mesophase microdomain of 1-30 µm or 50-200 µm;
step (B): taking a soft carbon, wherein the soft carbon is prepared by a carbonization reaction of coke with a mesophase microdomain of 1-30 µm or 50-200 µm; and
step (C): physically mixing the artificial graphite with the soft carbon to form the negative electrode material, wherein the particle size distribution D₁₀ of the negative electrode material is 1.87-3.84 µm, D₅₀ is 4.66-9.49 µm and D₉₀ is 8.74-21.10 µm.

2. The method for preparing a negative electrode material according to claim 1, wherein the tap density of the negative electrode material obtained in step (C) is 0.626-1.109 g/ml.

3. The method for preparing a negative electrode material according to claim 1, wherein in step (C), the artificial graphite and the soft carbon are physically mixed for 1 hour or more at a weight ratio of 1:1.

4. The method for preparing a negative electrode material according to claim 1, wherein under constant 0.2C charge current, the discharge capacity of the battery prepared from the negative electrode material obtained in step (C) at 5C discharge current is greater than 85% relative to that at 0.2C discharge current.

5. The method for preparing a negative electrode material according to claim 1, wherein under constant 0.2C discharge current, the charge capacity of the battery prepared from the negative electrode material obtained in step (C) at 5C charge current is greater than 75% relative to that at 0.2C charge current.

6. The method for preparing a negative electrode material according to claim 1, wherein under constant 0.2C charge current, the discharge capacity of the battery prepared from the negative electrode material obtained in step (C) at 8C discharge current is greater than 50% relative to that at 0.2C discharge current.

7. The method for preparing a negative electrode material according to claim 1, wherein under constant 0.2C discharge current, the charge capacity of the battery prepared from the negative electrode material obtained in step (C) at 8C charge current is greater than 50% relative to that at 0.2C charge current.

8. The method for preparing a negative electrode material according to claim 1, wherein in step (A), the particle size distribution D₅₀ of the artificial graphite is less than 3 µm or greater than 12 µm; in step (B), the particle size distribution D₅₀ of the soft carbon is 5-8 µm; and the tap density of the negative electrode material obtained in step (C) is 0.949-1.109 g/ml.

9. The method for preparing a negative electrode material according to claim 1, wherein the particle size distribution D₁₀ of the negative electrode material obtained in step (C) is 3.74-3.94 µm, D₅₀ is 9.39-9.59 µm and D₉₀ is 21.00-21.20 µm; and the cumulative proportion under particle sizes less than 2 µm is smaller than 1% by volume.

10. The method for preparing a negative electrode material according to claim 1, wherein in step (A), the artificial graphite is prepared from coke with the mesophase microdomain of 1-30 µm, and the particle size distribution D₁₀ of the negative electrode material obtained in step (C) is 1.87-2.23 µm, D₅₀ is 4.66-6.03 µm and D₉₀ is 9.02-12.60 µm.

11. The method for preparing a negative electrode material according to claim 10, wherein under the temperature of 45°C, the voltage of 4.3-2.4 V, the charge current of 2C, the discharge current of 3C, charging at mixed constant current/constant voltage (CC/CV) and discharging at a constant current (CC), the battery cell cycle life of the battery prepared from the negative electrode material obtained in step (C) is 400 cycles or more.

12. The method for preparing a negative electrode material according to claim 1, wherein in step (A), the artificial graphite is prepared from coke with the mesophase microdomain of 1-30 µm; in step (B), the soft carbon is prepared from coke with the mesophase microdomain of 1-30 µm; and the particle size distribution D₁₀ of the negative electrode material obtained in step (C) is 1.91-2.11 µm, D₅₀ is 4.93-5.13 µm and D₉₀ is 9.26-9.46 µm.

13. The method for preparing a negative electrode material according to claim 12, wherein under the temperature of 25°C, the voltage of 4.3-2.4 V, the charge current of 2C, the discharge current of 3C, charging under the mixed constant current/constant voltage (CC/CV) and discharging under the constant current (CC), the battery cell cycle life of the battery prepared from the negative electrode material obtained in step (C) is 2000 cycles or more.
